# EUROPEAN PATENT SPECIFICATION

(11) **EP 3 260 659 B1**
(45) Date of publication and mention of the grant of the patent: **11.09.2019**
(21) Application number: 17177470.6
(22) Date of filing: 22.06.2017
(51) Int. Cl.: F01D 5/14, F01D 5/18

(54) **FAN BLADE FILLER**
BLÄSERSCHAUFELFÜLLSTOFF
APPAREIL À AUBE MOBILE SOUFFLANTE

(30) Priority: 22.06.2016 US 201615189685
(43) Date of publication of application: 27.12.2017
(73) Proprietor: United Technologies Corporation, Farmington, CT 06032 (US)
(72) Inventor: QUINN, Mark, Wethersfield, CT 06109 (US); GROSSO, Jody M., Portland, CT 06480 (US)
(74) Representative: Dehns

(56) References cited:
- EP-A2- 2 119 871
- EP-A2- 2 243 929
- EP-A2- 2 305 953
- EP-A2- 2 518 270

## Description

### FIELD

The present disclosure relates to gas turbine engines, and, more specifically, to a rotor or fan blade assembly.

### BACKGROUND

A gas turbine engine typically includes a fan section, a compressor section, a combustor section, and a turbine section. A fan section may drive air along a bypass flowpath while a compressor section may drive air along a core flowpath. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. The compressor section typically includes low pressure and high pressure compressors, and the turbine section includes low pressure and high pressure turbines.

The fan section, compressor section, and turbine section typically include a series of rotor systems. Rotor systems typically include a disk and a plurality of circumferentially spaced blades, such as fan blades. A fan blade may be formed with hollow portions in the blade body to reduce weight of the blade. The hollow portions of a fan blade may contain filler materials. Filler material and fan blade surfaces may be relatively smooth, and bonding the filler material to the fan blade may be difficult. Porous mesh fabric, or scrim, which is used for bonding the filler material to the fan blade, may be difficult to manufacture and apply to non-planar surfaces. Scrim fabrics may tend to fray and may increase manufacturing costs, particularly as the complexity of filler material and fan blade surfaces increases. Small pieces of scrim may be difficult to accurately place, particularly on non-planar surfaces, and may shift when heat and pressure is applied during bonding. EP2518270A2 discloses a prior art fan blade as set forth in the preamble of claim 1. EP2243929A2 discloses a prior art fan blade.

### SUMMARY

A fan blade of a gas turbine engine is provided according to claim 1.

In various embodiments, an adhesive may be formed on the first surface of the blade filler. The first surface of the blade filler may be bonded to the inner surface of the blade body. The first surface of the blade filler may comprise a non-planar surface. The bump may have a height between 0.20 mm (0.008 inches) to 0.30 mm (0.012 inches). A blade cover may be disposed over the blade filler and the cavity. The first surface of the blade filler may be bonded to the blade cover.

There is further provided a fan section of a gas turbine engine according to claim 9.

A material of the blade filler may comprise a closed cell polyurethane foam.

A method for forming a fan blade is also provided according to claim 10.

In various embodiments, the method may further include the step of applying an adhesive to at least one of the fan blade component or the first surface of the blade filler. The fan blade component may include at least one of the blade body or a blade cover. The method may further include the step of forming the blade filler further comprises at least one of compression molding or injection molding the blade filler and the integral bump.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates a fragmentary perspective view of a fan section of a gas turbine engine, in accordance with various embodiments;
FIG. 3 illustrates an expanded view of a fan blade including a blade filler and a blade cover, in accordance with various embodiments;
FIG. 4A illustrates a front view of a blade filler with integral bumps, in accordance with various embodiments; and
FIG. 4B illustrates a perspective view of a blade filler with integral bumps, in accordance with various embodiments;
FIG. 5 illustrates a cross-sectional view of a portion of a fan blade including a blade filler, in accordance with various embodiments; and
FIG. 6 illustrates a method of forming a fan blade including a blade filler, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

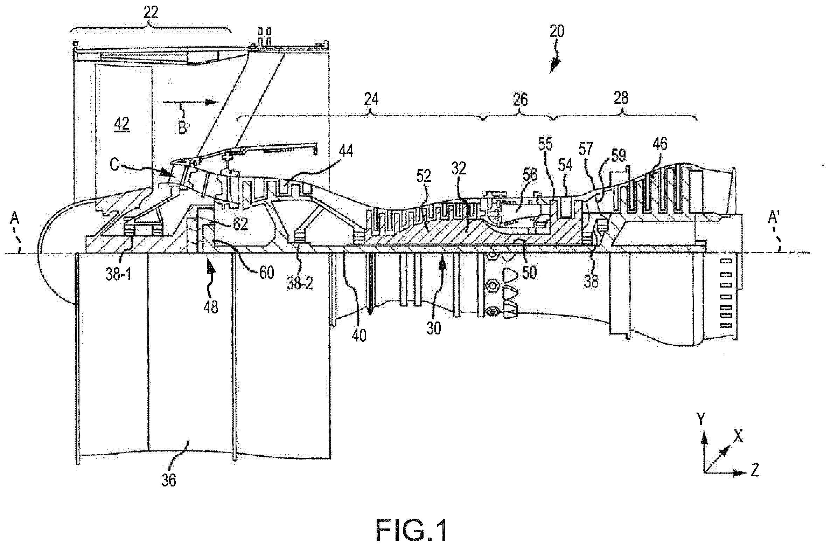

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a bypass flow-path B while compressor section 24 can drive coolant along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction on the provided xyz axis. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six. In various embodiments, the bypass ratio of gas turbine engine 20 may be greater than ten. In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five. In various embodiments, the bypass ratio of gas turbine engine 20 is greater than about ten. In various embodiments, the diameter of fan 42 may be significantly larger than that of the low pressure compressor 44, and the low pressure turbine 46 may have a pressure ratio that is greater than about five. Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

In a turbofan engine, lighter components generally lead to more efficient performance. If less energy is expended moving internal engine parts, more energy is available for useful work. At the same time, the components themselves must be strong enough to withstand forces typical for the operating environment and performance envelope. Combining parts having both high strength and low density greatly restricts material choices and increases costs. The fan section 22, the compressor section 24 and the turbine section 28 may each comprise rotor systems including blade assemblies having one or more sets of rotating blades, which may rotate about engine central longitudinal axis A-A'. In blade assemblies, hollow blades including filler material advantageously reduce the weight associated with the larger blades.

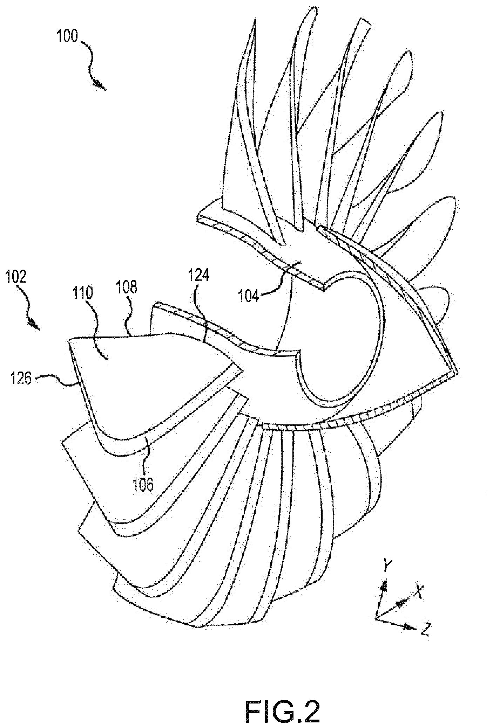

With reference to FIGS. 1 and 2, a perspective view of a blade assembly 100 of a fan 42 from fan section 22 is shown, with certain components removed, in accordance with various embodiments. Blade assembly 100 may comprise a plurality of rotating blades or fan blades 102 (or airfoil, rotor blade, etc.) extending radially outward from disk 104, which may be configured to rotate about engine central longitudinal axis A-A'. Disk 104 may be centered on the rotational axis of gas turbine engine 20 with a plurality of fan blades 102 attached to the disk 104 and spaced apart in the circumferential or tangential direction. Fan blade 102 may include a hub end or root 124 attached to the disk 104 and a radially outer edge or tip 126 located radially outward from the root 124. Fan blade 102 may include a leading edge 106 opposite to trailing edge 108. Fan blade 102 may further include a blade body 110 between a leading edge 106 and a trailing edge 108 of fan blade 102. The leading edge 106 and trailing edge 108 may extend from root 124 to tip 126 of fan blade 102, with root 124 being located radially inward with respect to blade body 110 and tip 126 being located radially outward with respect to blade body 110. Fan blade 102 may further include a generally concave pressure side and a generally convex suction side joined together at the respective leading edge 106 and trailing edge 108. Fan blade 102 may be curved and twisted relative to, for example, a plane extending radially from the disk 104, in terms of the fan blade 102 overall geometry. For example, fan blade 102 may curve into or out of the xy plane, the xz plane, and/or the zy plane, and for example, may twist relative to the x axis, y axis and/or z axis. It will be noted that fan blades for gas turbine engines may be provided in the variety of sizes, shapes and geometries. The fan blades designated by element number 102 in FIGS. 2-5 are examples and this disclosure is not limited to the specific fan blades disclosed herein. Further, the disclosed fan blade designs may be adapted for use in other types of jet engines, propellers, rotors, etc.

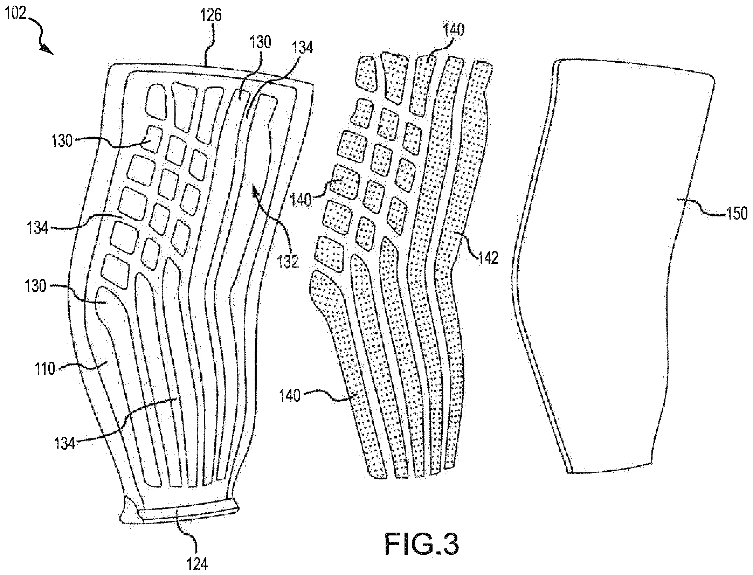

With reference to FIG. 3, a fan blade 102 for a gas turbine is shown in additional detail, in accordance with various embodiments. In various embodiments, fan blade 102 may include a blade body 110 fabricated from titanium, titanium alloy, aluminum, aluminum alloy, composite material or other suitable structural materials. To reduce the weight of fan blade 102, one or more cavities 130 may be formed through blade body 110. Cavities 130 may be formed by removing material from a surface of blade body 110, such as by machining, milling, electrochemical machining (ECM), electrical discharge machining (EDM) or other suitable process. Cavities 130 are shown in FIG. 3 as being formed in a surface of blade body 110, which may be a suction surface or a pressure surface of fan blade 102. An inner surface 132 of blade body 110 may define a cavity 130. A plurality of cavities 130 may further be defined by stiffening walls or ribs 134. Cavities 130 may comprise a plurality of pockets or channels separated by ribs 134. Thus, ribs 134 may be formed on internal surface 132 of blade body 110 and may define cavities 130. Ribs 134 may reinforce fan blade 102 and may allow the outer surfaces of fan blade 102 to be made thinner, thus saving weight. The particular design of ribs 134 may depend on several factors but may typically be directed toward balancing weight reduction and manufacturing costs.

In various embodiments, cavities 130 may be filled wholly or partially with a blade filler 140. The blade filler 140 may be a structural filler material that may be bonded to blade body 110 to form a part of the fan blade 102. A plurality of pre-formed strips or pieces of a blade filler 140 may each be sized to fit within one of the plurality of cavities 130. Blade filler 140 may at least partially fill one or more cavities 130 between adjacent ribs 134. In various embodiments, blade filler 140 may include a plurality of bumps 142 formed integrally on one or more surfaces of blade filler 140.

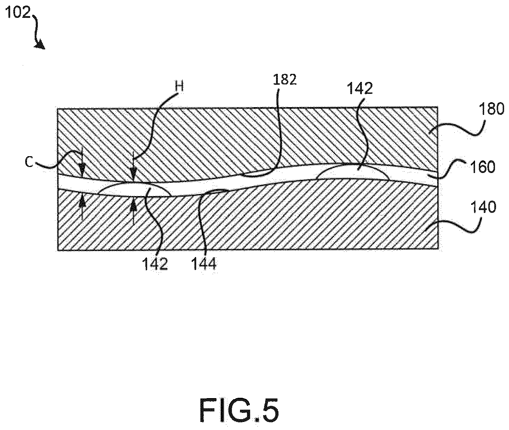

In various embodiments, a blade cover 150 may be placed over cavities 130 to form an aerodynamic flow surface over cavities 130. In various embodiments, blade cover 150 may be fabricated from titanium, titanium alloy, aluminum, aluminum alloy, composite material or other suitable structural materials. In various embodiments, blade filler 140 may be glued, bonded, or otherwise coupled to blade body 110 and/or blade cover 150. Referring momentarily to FIG. 5 and with continued reference to FIG. 3, an adhesive 160 may be used to bond the blade filler 140 with bumps 142 to inner surface 132 of blade body 110, ribs 134, and/or blade cover 150.

Referring again to FIG. 3, blade filler 140 may conform to the inner surface 132 of blade body 110 and to an inner surface of blade cover 150. Blade filler 140 may prevent inward distortion (i.e., inward toward cavity 130) of the surfaces of blade body 110 and blade cover 150 and may increase the ability of the fan blade 102 to carry shear load. Blade filler 140 may provide additional surface area to which the blade cover 150 can contact, mate, and/or bond. In various embodiments, blade filler 140 may comprise a geometry that is complementary to the geometry of cavities 130. Although the blade body 110, cavities 130, ribs 134, blade filler 140 and blade cover 150 of fan blade 102 are shown as having certain relative dimensions, such dimensions are only exemplary and other relative dimensions are possible.

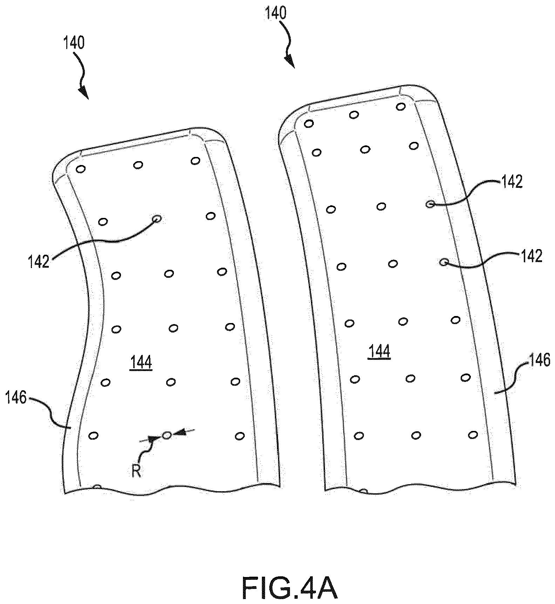

With reference to FIG. 4A, a blade filler including bumps is shown, in accordance with various embodiments. Blade filler 140 may include a low density filler or another lightweight material, such as a foam. Blade filler 140 may comprise a material having a lower density than, for example, the material of blade body 110. In various embodiments, blade filler 140 may comprise a polymer foam, such as polyethylene or polyurethane foam, a metallic foam, such as aluminum foam, or other suitable materials. Blade filler 140 may comprise, for example, a closed cell foam, such as closed cell polyurethane foam. According to the invention, blade filler 140 includes bumps 142 formed on a first surface 144 of blade filler 140. First surface 144 may comprise a bonding surface of blade filler 140. A bump 142 comprises raised feature such as a bump or a ridge formed on or integrated onto first surface 144 of blade filler 140. One or more surfaces of blade filler 140 may not include bumps 142, such as a second surface 146 of blade filler 140. Second surface 146 may comprise a non-bonding surface of blade filler 140. Blade filler 140 may comprise various non-planar surfaces, wherein a non-planar surface may be a surface that is not flat. As such, a non-bonding surface, such as second surface 146 of blade filler 140, may be a portion or extension of a bonding surface, such as a first surface 144 with bumps 142. As illustrated in FIG. 4A, second surface 146 without bumps 142 may include edge surfaces of a piece of blade filler 140 adjacent to first surface 144 with bumps 142. It will be understood that various bonding surfaces and non-bonding surfaces of blade filler 140 may include bumps 142. According to the invention, bumps 142 are integrally formed with blade filler 140. As used herein, the term "integrated" or "integral" may include forming one, single continuous piece. Bumps 142 may, for example, be molded with blade filler 140, or machined into first surface 144, depending on the blade filler 140 fabrication method. Blade filler 140 and bumps 142 may be made from moldable materials. The material of blade filler 140 with bumps 142 may be compression molded using an autoclave or injection molded by injecting material into a mold. Blade filler 140 and bumps 142 may be formed by a subtractive manufacturing process such as casting, forging, milling, grinding, machining, and the like. Blade filler 140 and bumps 142 may also be formed by additive manufacturing.

In various embodiments, a base of bumps 142 may have a width or radius R of about 2 millimeters (0.08 inches), wherein "about" in this context only means +/- 1 millimeter (mm) (0.04 inches). Radius R of bumps 142 may be between 1.52 mm (0.06 inches) to 2.54 mm (0.10 inches), and further between 1.78 mm (0.07 inches) to 2.29 mm (0.09 inches). Bumps 142 may include various shapes, such as semi-spherical, dome, pyramid, conical or other geometric shape. Bumps 142 are illustrated in FIG. 4A as having a round base shape, however it will be understood that a base of each bump may be round, oval, triangular, rectangular, or other shape. A density of bumps 142 across first surface 144 may vary, i.e., a distance between adjacent bumps 142 may be various distances, and may depend on a size and shape of the surface, material type, adhesive type and/or other design considerations. Bumps 142 may or may not be uniformly spaced apart, such that portions of first surface 144 may have a greater density of bumps 142 than other portions of first surface 144. For example, bumps 142 may be spaced apart by less than 2.54 mm (0.10 inches) to 10 mm (0.39 inches), by less than 20 mm (0.79 inches), or may be spaced apart by less than or greater than 25.4 mm (1 inch).

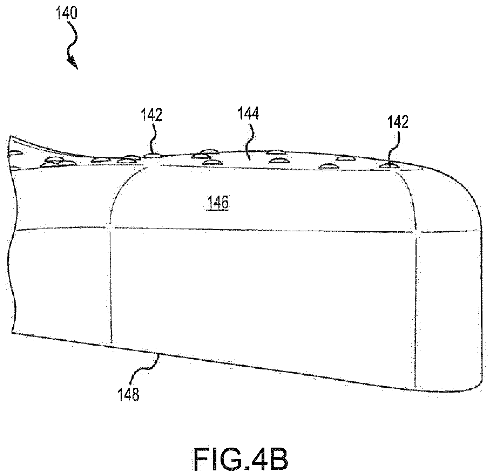

With reference to FIG. 4B, a blade filler with integral bumps is shown, in accordance with the invention. As discussed, bumps 142 are formed on a bonding surface, such as first surface 144, of blade filler 140. Non-bonding surfaces of 9 blade filler 140, such as second surface 146, may or may not include bumps 142. A third surface 148 of blade filler 140, which may be opposite to first surface 144, may comprise a non-bonding surface of blade filler 140 and may or may not include bumps 142. Each of bumps 142 may generally have a uniform height and may generally follow a contour of first surface 144, such that blade filler 140 with bumps 142 fits the shape of its corresponding cavity 130 in blade body 110 (see FIG. 3). Bumps 142 may increase a surface area of first surface 144, thereby improving bonding first surface 144. In various embodiments, bumps 142 may have a semi-spherical or dome-shaped geometry, or other shape. A shape of bumps 142 may allow blade filler 140 to be molded and subsequently removed from the mold more easily. By incorporating the bumps 142 or surface features of blade filler 140 into a mold, the cost of assembling fan blade 102 with blade filler 140 may be reduced.

With reference to FIG. 5, a cross-sectional view of a portion of a blade filler 140 having bumps 142 is shown bonded to a surface of a fan blade component, in accordance with various embodiments. Blade filler 140 may be bonded to a fan blade component 180, which may be blade body 110 or blade cover 150. First surface 144 of blade filler 140 with bumps 142 may be bonded to a bonding surface 182 of the fan blade component 180. The bonding surface 182 of the fan blade component 180 may comprise an inner surface 132 of a cavity 130 of blade body 110. In various embodiments, blade filler 140 may be bonded to fan blade component 180 by an adhesive 160. Adhesive 160 may include a urethane-based adhesive, polyurethane-based adhesive, epoxy-based adhesive, epoxy film, rubber adhesive or other suitable adhesive. Adhesive 160 may be applied to first surface 144 of blade filler 140 or to the bonding surface 182 of fan blade component 180. Heat and pressure may be applied to cure adhesive 160 to bond blade filler 140 to fan blade component 180.

In various embodiments, bumps 142 formed on first surface 144 may have a height H as measured from first surface 144 to a tip of bump 142 (see FIG. 5) which may further be a bonding surface. Bumps may include a height H of about of about 0.25 mm (0.01 inches), wherein "about" in this context only means +/- 0.1 mm (0.004 inches). Height H of bumps 142 may be between 0.025 mm (0.001 inches) and 0.76 mm (0.03 inches), and further between 0.13 mm (0.005 inches) and 0.51 mm (0.02 inches), and further between 0.20 mm (0.008 inches) to 0.30 mm (0.012 inches).

A clearance C is defined between first surface 144 of blade filler 140 and bonding surface 182 of fan blade component 180 by the height H of bumps 142. Bonding surface 182 of fan blade component 180 contacts bumps 142, and does not directly contact first surface 144 of blade filler 140. Bumps 142 provide clearance C for adhesive 160 to fit between fan blade component 180 and blade filler 140, with adhesive 160 formed around bumps 142. Thus, adhesive 160 may remain between fan blade component 180 and blade filler 140 during the application of heat and pressure for bonding. The height of the bumps 142 sets the adhesive 160 layer thickness and reduces areas of direct contact between blade filler 140 and the bonding surface 182 of the fan blade component 180 and the pushing out of adhesive 160 during the adhesive cure process. Bumps 142 integrated onto the bonding surfaces of blade filler 140 may eliminate the need for a scrim separator between first surface 144 of blade filler 140 and bonding surface 182 of fan blade component 180.

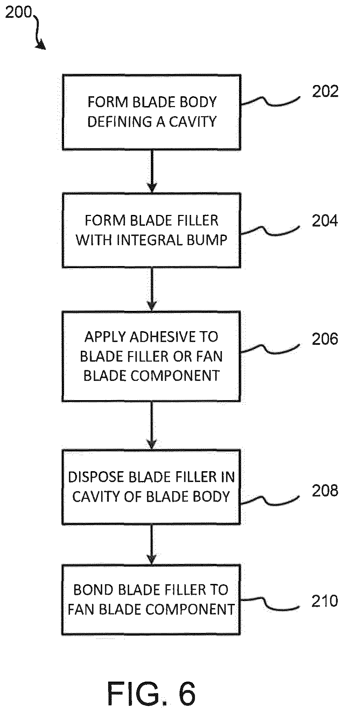

With reference to FIG. 6 a method 200 of forming a fan blade 102 including blade filler 140 (of FIGS. 3-5) is shown, in accordance with various embodiments. Method 200 may include the step of forming a blade body defining a cavity (step 202), forming a blade filler with an integral bump (step 204), applying an adhesive to the blade filler or to the fan blade component (step 206), disposing the blade filler in the cavity of the blade body (step 208), and bonding the blade filler to the fan blade component (step 210).

Step 204 may further include machining integral bumps on blade filler 140 or molding integral bumps, such as bumps 142, with blade filler 140. Blade filler 140 with bumps 142 may be compression molded using an autoclave or injection molded by injecting material into a mold. A mold may be formed to define outer surfaces of blade filler 140 including bumps 142. The mold may be a negative of a fan blade component, such as blade filler 140 with bumps 142. A material may be placed into the mold. Blade filler 140 formed of moldable materials such as polyurethane closed cell foam. The contents of the mold may undergo a curing process. Thus, a blade filler 140 with integral bumps may be formed using a low cost technique.

Step 206 may further include applying adhesive 160 to a fan blade component 180, which may be the blade body 110 and/or the blade cover 150. Adhesive 160 may be applied to first surface 144 of fan blade filler 140 and around bumps 142 of blade filler 140. Adhesive 160 may be applied to a bonding surface 182 of the fan blade component 180. Adhesive 160 may be applied to inner surface 132 of cavity 130 of blade body 110, and/or to an inner surface of blade cover 150.

Step 208 may further include placing a pre-formed blade filler 140, with integral bumps pre-formed on a bonding surface of blade filler 140, into cavity 130 of blade body 110.

Step 210 may further include bonding one or more bonding surfaces of blade filler 140 to a bonding surface 182 of the fan blade component 180, which may include which may be the blade body 110 and/or the blade cover 150. A first surface 144 of blade filler 140, with integral bumps pre-formed on a bonding surface of blade filler 140, may be bonded to inner surface 132 of cavity 130 of blade body 110, and/or to an inner surface of blade cover 150.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A fan blade (102) of a gas turbine engine (20), comprising:
a blade body (110) including an inner surface (132) defining a cavity (130) in the blade body (110);
a blade filler (140) disposed in the cavity (130), the blade filler (140) including bumps (142) integrally formed on a first surface (144) of the blade filler (140),
**characterised in that**: the bumps (142) protrude from the first surface (144) to an opposing bonding surface (182) of a fan blade component (180) to provide a clearance (C) for adhesive (160) to fit between the fan blade component (180) and the blade filler (140) around the bumps (142).

2. The fan blade (102) of claim 1, further comprising an adhesive (160) formed on the first surface (144) of the blade filler (140).

3. The fan blade (102) of claim 1 or 2, wherein the first surface (144) of the blade filler (140) is bonded to the inner surface (132) of the blade body (110).

4. The fan blade (102) of claim 1, 2 or 3, wherein the first surface (144) of the blade filler (140) comprises a non-planar surface.

5. The fan blade (102) of any preceding claim, wherein the bump (142) has a height (H) between 0.20 mm (0.008 inches) to 0.30 mm (0.012 inches).

6. The fan blade (102) of any preceding claim, further comprising a blade cover (150) disposed over the blade filler (140) and the cavity (130).

7. The fan blade (102) of claim 6, wherein the first surface (144) of the blade filler (140) is bonded to the blade cover (150).

8. The fan blade (102) of any preceding claim, wherein a material of the blade filler (140) comprises a closed cell polyurethane foam.

9. A fan section (22) of a gas turbine engine (20), comprising the fan blade (102) of any preceding claim configured to rotate about an axis (A-A').

10. A method for forming a fan blade (102), comprising:
forming a blade body (110) having an inner surface (132) defining a cavity (130);
forming a blade filler (140) having a first surface (144) with integral bumps (142);
disposing the blade filler (140) in the cavity (130); and
bonding the first surface (144) of the blade filler (140) to a fan blade component (180),
**characterised in that**:
the bumps (142) protrude form the first surface (144) to an opposing bonding surface (182) of a fan blade component (180) to provide a clearance (C) for adhesive (160) to fit between the fan blade component (180) and the blade filler (140) around the bumps (142).

11. The method of claim 10, further comprising applying an adhesive (160) to at least one of the fan blade component (180) or the first surface (144) of the blade filler (140).

12. The method of claim 10 or 11, wherein the fan blade component (180) includes at least one of the blade body (110) or a blade cover (150).

13. The method of claim 10, 11 or 12, wherein the forming the blade filler (140) further comprises at least one of compression molding or injection molding the blade filler (140) and the integral bump (142).

## Patentansprüche

1. Bläserschaufel (102) eines Gasturbinentriebwerks (20), umfassend:
einen Schaufelkörper (110), beinhaltend eine Innenfläche (132), die einen Hohlraum (130) im Schaufelkörper (110) definiert;
einen Schaufelfüllstoff (140), der in dem Hohlraum (130) angeordnet ist, wobei der Schaufelfüllstoff (140) Erhebungen (142) beinhaltet, die auf einer ersten Fläche (144) des Schaufelfüllstoffs (140) einstückig gebildet sind,
**dadurch gekennzeichnet, dass**:
die Erhebungen (142) von der ersten Fläche (144) zu einer gegenüberliegenden Verbindungsfläche (182) einer Bläserschaufelkomponente (180) vorstehen, um einen Abstand (C) bereitzustellen, damit Klebstoff (160) zwischen die Bläserschaufelkomponente (180) und den Schaufelfüllstoff (140) um die Erhebungen (142) passt.

2. Bläserschaufel (102) nach Anspruch 1, ferner umfassend einen Klebstoff (160), der auf der ersten Fläche (144) des Schaufelfüllstoffs (140) gebildet ist.

3. Bläserschaufel (102) nach Anspruch 1 oder 2, wobei die erste Fläche (144) des Schaufelfüllstoffs (140) an die Innenfläche (132) des Schaufelkörpers (110) gebunden ist.

4. Bläserschaufel (102) nach Anspruch 1, 2 oder 3, wobei die erste Fläche (144) des Schaufelfüllstoffs (140) eine nicht ebene Oberfläche umfasst.

5. Bläserschaufel (102) nach einem der vorhergehenden Ansprüche, wobei die Erhebung (142) eine Höhe (H) zwischen 0,20 mm (0,008 Zoll) und 0,30 mm (0,012 Zoll) aufweist.

6. Bläserschaufel (102) nach einem der vorhergehenden Ansprüche, ferner umfassend eine Schaufelabdeckung (150), die über dem Schaufelfüllstoff (140) und dem Hohlraum (130) angeordnet ist.

7. Bläserschaufel (102) nach Anspruch 6, wobei die erste Fläche (144) des Schaufelfüllstoffs (140) an die Schaufelabdeckung (150) gebunden ist.

8. Bläserschaufel (102) nach einem der vorhergehenden Ansprüche, wobei ein Material des Schaufelfüllstoffs (140) einen Polyurethanschaumstoff mit geschlossenen Zellen umfasst.

9. Bläserabschnitt (22) eines Gasturbinentriebwerks (20), umfassend die Bläserschaufel (102) nach einem der vorhergehenden Ansprüche, die dazu konfiguriert ist, um eine Achse (A-A') zu rotieren.

10. Verfahren zum Bilden einer Bläserschaufel (102), umfassend:
Bilden eines Schaufelkörpers (110), beinhaltend eine Innenfläche (132), die einen Hohlraum (130) definiert;
Bilden eines Schaufelfüllstoffs (140), beinhaltend eine erste Fläche (144) mit einstückigen Erhebungen (142);
Anordnen des Schaufelfüllstoffs (140) im Hohlraum (130); und
Binden der ersten Fläche (144) des Schaufelfüllstoffs (140) an eine Bläserschaufelkomponente (180),
**dadurch gekennzeichnet, dass**:
die Erhebungen (142) von der ersten Fläche (144) zu einer gegenüberliegenden Fläche (182) einer Bläserschaufelkomponente (180) vorstehen, um einen Abstand (C) bereitzustellen, damit Klebstoff (160) zwischen die Bläserschaufelkomponente (180) und den Schaufelfüllstoff (140) um die Erhebungen (142) passt.

11. Verfahren nach Anspruch 10, ferner umfassend Auftragen eines Klebstoffs (160) auf mindestens eines von der Bläserschaufelkomponente (180) oder der ersten Fläche (144) des Schaufelfüllstoffs (140).

12. Verfahren nach Anspruch 10 oder 11, wobei die Bläserschaufelkomponente (180) mindestens eines von dem Schaufelkörper (110) oder einer Schaufelabdeckung (150) beinhaltet.

13. Verfahren nach Anspruch 10, 11 oder 12, wobei das Bilden des Schaufelfüllstoffs (140) ferner mindestens eines von Formpressen oder Spritzgießen des Schaufelfüllstoffs (140) und der einstückigen Erhebung (142) umfasst.

## Revendications

1. Aube de soufflante (102) d'un moteur à turbine à gaz (20), comprenant :
un corps d'aube (110) comportant une surface intérieure (132) définissant une cavité (130) dans le corps d'aube (110) ;
un élément de remplissage d'aube (140) disposé dans la cavité (130), l'élément de remplissage d'aube (140) comportant des bosses (142) formées intégralement sur une première surface (144) de l'élément de remplissage d'aube (140),
**caractérisée en ce que** :
les bosses (142) font saillie de la première surface (144) à une surface de liaison opposée (182) d'un composant d'aube de soufflante (180) afin de fournir un jeu (C) permettant à l'adhésif (160) de s'insérer entre le composant d'aube de soufflante (180) et l'élément de remplissage d'aube (140) autour des bosses (142).

2. Aube de soufflante (102) selon la revendication 1, comprenant en outre un adhésif (160) formé sur la première surface (144) de l'élément de remplissage d'aube (140).

3. Aube de soufflante (102) selon la revendication 1 ou 2, dans laquelle la première surface (144) de l'élément de remplissage d'aube (140) est liée à la surface intérieure (132) du corps d'aube (110).

4. Aube de soufflante (102) selon la revendication 1, 2 ou 3, dans laquelle la première surface (144) de l'élément de remplissage d'aube (140) comprend une surface non plane.

5. Aube de soufflante (102) selon une quelconque revendication précédente, dans laquelle la bosse (142) a une hauteur (H) comprise entre 0,20 mm (0,008 pouce) et 0,30 mm (0,012 pouce) .

6. Aube de soufflante (102) selon une quelconque revendication précédente, comprenant en outre un couvercle d'aube (150) disposé sur l'élément de remplissage d'aube (140) et la cavité (130).

7. Aube de soufflante (102) selon la revendication 6, dans laquelle la première surface (144) de l'élément de remplissage d'aube (140) est liée au couvercle d'aube (150).

8. Aube de soufflante (102) selon une quelconque revendication précédente, dans laquelle un matériau de l'élément de remplissage d'aube (140) comprend une mousse de polyuréthane à cellules fermées.

9. Section de soufflante (22) d'un moteur à turbine à gaz (20), comprenant l'aube de soufflante (102) selon une quelconque revendication précédente, configurée pour tourner autour d'un axe (A-A').

10. Procédé de formation d'une aube de soufflante (102), comprenant :
la formation d'un corps d'aube (110) ayant une surface intérieure (132) définissant une cavité (130) ;
la formation d'un élément de remplissage d'aube (140) ayant une première surface (144) avec des bosses intégrées (142) ;
le placement de l'élément de remplissage d'aube (140) dans la cavité (130) ; et
la liaison de la première surface (144) de l'élément de remplissage d'aube (140) à un composant d'aube de soufflante (180),
**caractérisé en ce que** :
les bosses (142) font saillie de la première surface (144) à une surface de liaison opposée (182) d'un composant d'aube de soufflante (180) afin de fournir un jeu (C) permettant à l'adhésif (160) de s'insérer entre le composant d'aube de soufflante (180) et l'élément de remplissage d'aube (140) autour des bosses (142).

11. Procédé selon la revendication 10, comprenant en outre l'application d'un adhésif (160) sur au moins l'un du composant d'aube de soufflante (180) ou de la première surface (144) de l'élément de remplissage d'aube (140).

12. Procédé selon la revendication 10 ou 11, dans lequel le composant d'aube de soufflante (180) comporte au moins l'un du corps d'aube (110) ou d'un couvercle d'aube (150).

13. Procédé selon la revendication 10, 11 ou 12, dans lequel la formation de l'élément de remplissage d'aube (140) comprend en outre au moins l'un du moulage par compression ou du moulage par injection de l'élément de remplissage d'aube (140) et de la bosse intégrée (142).
